# EUROPEAN PATENT APPLICATION

(11) **EP 3 521 601 A1**
(43) Date of publication of application: **07.08.2019**
(21) Application number: 17855431.7
(22) Date of filing: 02.08.2017
(51) Int. Cl.: F02D 45/00, F02D 43/00, F02P 5/152

(54) **INTERNAL COMBUSTION ENGINE CONTROL DEVICE**

(30) Priority: 30.09.2016 JP 2016192523
(71) Applicant: Hitachi Automotive Systems, Ltd., Hitachinaka-shi, Ibaraki 312-8503 (JP)
(72) Inventor: ORYOJI, Kazuhiro, Tokyo 100-8280 (JP); AKAGI, Yoshihiko, Hitachinaka-shi Ibaraki 312-8503 (JP); ASANO, Seiji, Hitachinaka-shi Ibaraki 312-8503 (JP)
(74) Representative: MERH-IP Matias Erny Reichl Hoffmann Patentanwälte PartG mbB
(86) International application number: PCT/JP2017/027990
(87) International publication number: WO 2018/061473

(57) **Abstract**

An internal combustion engine control device that controls an internal combustion engine having a knock sensor that estimates in-cylinder pressure wave intensity by performing processing in view of a characteristic of a transmission path of vibration from a knock sensor signal, including: a signal correction unit that corrects a signal for each of frequencies of the knock sensor on the basis of a characteristic of an engine block; and a calculation unit that calculates pressure wave intensity from the signal for each of frequencies corrected by the signal correction unit.

## Description

### Technical Field

The present invention relates to an internal combustion engine control device and more particularly to an internal combustion engine control device that precisely detects occurrence of knocking using a signal detected by a knock sensor.

### Background Art

In recent years, regulations concerning fuel efficiency and emissions have been strengthened in vehicles such as automobiles, and such regulations are expected to become severer in the future. In particular, the regulation related to fuel efficiency is a matter of great interest because of recent problems of high price of fuel, influence on global warming, depletion of energy resources, or the like.

Under such circumstances, for example, various technological developments are underway in the automobile industry to improve the fuel performance and exhaust performance of the vehicle. One example of the development technologies aimed at improving such fuel performance is a high compression ratio technology for increasing the compression ratio of the internal combustion engine. Furthermore, one example of development technologies for improving exhaust performance is multiple injection of injecting fuel in a plurality of times during intake stroke to reduce the fuel injection amount per injection to reduce Particulate Number (PN).

Meanwhile, while the above-described high compression ratio technology for increasing the compression ratio of the internal combustion engine is effective in increasing the thermal efficiency and achieves improvement of the fuel efficiency, this technology is known to induce knocking due to the temperature rise in the combustion chamber.

Therefore, in a conventional internal combustion engine, a vibration type knock sensor is attached to a cylinder block and by utilizing the fact that a specific frequency signal level rises at the time of occurrence of knocking, a signal output in a predetermined period (knock window) from the knock sensor is analyzed by fast Fourier transform (FFT) to detect occurrence of knocking.

For example, PTL 1 discloses a technique of first defining a weighted average value of vibration waveform components of a plurality of frequency bands extracted from an output signal of a knock sensor, as knock intensity, and a greater weighting coefficient is used for higher frequency components, thereby appropriately evaluating a vibration sound so as to detect the knock intensity.

### Citation List

### Patent Literatures

PTL 1: JP H5-79440 A

### Summary of Invention

### Technical Problem

Phenomenon of knocking is abnormal combustion that occurs starting from self-ignition occurring in a region (non-burning region) where a flame has not yet reached, apart from the progress of combustion due to flame propagation starting from the spark discharge in an ignition plug. Normally, self-ignition generated in the non-burning region forms a spatial pressure gradient, leading to pressure wave propagation in the cylinder. A resulting propagating pressure wave acts as an impulsive force to the engine block when colliding with the inner wall surface of the engine cylinder, causing vibration of the engine block, so as to appear as a detection value of the knock sensor. Originally, the knock intensity that is to be detected is the intensity of the pressure wave in the cylinder. Although the technique of PTL 1 can appropriately evaluate the sound intensity appearing as a vibration result of a block, it is difficult to evaluate the intensity of the pressure wave in the engine cylinder.

The present invention has been made in view of the above problems, and aims to provide an internal combustion engine control device capable of detecting in-cylinder pressure wave intensity at the time of occurrence of knocking on the basis of a characteristic frequency component of a knock sensor signal.

### Solution to Problem

In order to solve the above problem, the present invention provides an internal combustion engine control device that controls an internal combustion engine having a knock sensor, the control device including: a signal correction unit that corrects a signal for each of frequencies of the knock sensor on the basis of a characteristic of an engine block; and a calculation unit that calculates pressure wave intensity from the signal for each of-frequencies corrected by the signal correction unit.

### Advantageous Effects of Invention

As can be understood from the above description, according to the present invention, the knock sensor signal is corrected on the basis of a characteristic of the engine block and the knock intensity is detected on the basis of the corrected knock sensor signal, making it possible to estimate the intensity of the pressure wave causing vibration of the engine block. This makes it possible to implement control in view of knock detection accuracy enhancement and effects on the engine block.

Problems, configurations, and effects other than in the above will become apparent by the following description in the embodiments as follows.

### Brief Description of Drawings

FIG. 1 is an overall configuration diagram illustrating an overall configuration of an internal combustion engine with application of an internal combustion engine control device according to an embodiment of the present invention.
FIG. 2 is a block diagram illustrating an internal configuration of the control device illustrated in FIG. 1.
FIG. 3 is a block diagram illustrating a configuration of processing starting from the knock sensor signal input to the control device illustrated in FIG. 1 until the knock frequency intensity is calculated.
FIG. 4 is a diagram illustrating an example of frequency components of a pressure sensor signal and frequency components of a knock sensor signal
FIG. 5 is a diagram illustrating an example of a linear relationship of knock sensor signal strength and pressure wave intensity defined on the basis of an in-cylinder pressure.
FIG. 6 is a diagram illustrating a difference in knock sensor signals between mutually different cylinders having occurrence of knocking.
FIG. 7 is a diagram illustrating a difference in knock sensor signals between different coolant temperatures.
FIG. 8 is a diagram illustrating a flow of knock intensity detection performed by the internal combustion engine control device according to the present invention.

### Description of Embodiments

Hereinafter, an embodiment of an internal combustion engine control device an according to the present invention will be described with reference to the drawings. Exemplary Embodiments

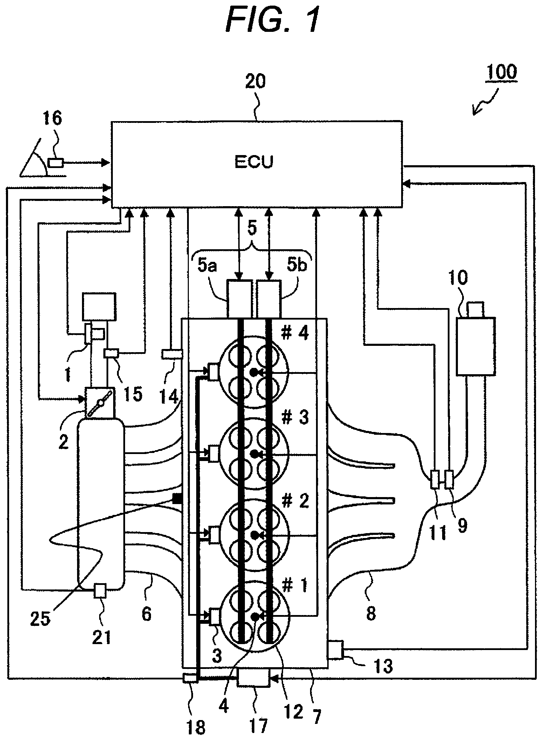

FIG. 1 illustrates an overall configuration of an internal combustion engine to which an embodiment of an internal combustion engine control device according to the present invention is applied, and illustrates, for example, a four-cylinder gasoline engine for an automobile, configured to implement spark ignition combustion.

An engine (internal combustion engine) 100 in the illustration includes, at an appropriate position on an intake pipe 6: an air flow sensor 1 for measuring the intake air amount, an electronically controlled throttle 2 for adjusting the pressure of the intake pipe 6; an intake air temperature sensor 15 as an aspect of an intake air temperature detector and that measures the intake air temperature; and an intake pressure sensor 21 for measuring the pressure in the intake pipe 6.

The engine 100 further includes: a fuel injection device (in-cylinder direct injection injector or simply injector) 3 for injecting fuel into the combustion chamber 12 of each of cylinders, namely cylinders (#1 to #4) communicating with each of the intake pipes 6; and an ignition system 4 that supplies ignition energy. The engine 100 also includes: a coolant temperature sensor 14 for measuring the coolant temperature of the engine 100 at an appropriate position of a cylinder head 7; and a variable valve 5 constituted with an intake valve variable device 5a for adjusting the intake gas flowing into the cylinder and with an exhaust valve variable device 5b for regulating the exhaust gas discharged from the inside of the cylinder. Here, the variable valve 5 has a phase angle sensor (not illustrated) that detects a phase angle of the intake valve variable device 5a and the exhaust valve variable device 5b. By adjusting the variable valve 5 (particularly the phase angle of the intake valve variable device 5a and the exhaust valve variable device 5b) by an ECU 20 to be described later, it is possible to adjust the intake air amount and an EGR amount of all the cylinders of #1 to #4.

Furthermore, a high-pressure fuel pump 17 for supplying high-pressure fuel to the fuel injection device 3 is connected to the fuel injection device 3 of the engine 100 via a fuel pipe. The fuel pipe is equipped with a fuel pressure sensor 18 for measuring a fuel pressure. A crankshaft (not illustrated) of the engine 100 is equipped with a crank angle sensor 13 for calculating a rotation angle of the crankshaft. A cylinder block (engine block) of the engine 100 is equipped with a knock sensor 25 for detecting vibration of the engine 100.

Furthermore, the engine 100 includes at an appropriate position of an exhaust pipe 8: a three-way catalyst 10 for purifying an exhaust gas; an air-fuel ratio sensor 9 as an aspect of an air-fuel ratio detector to detect an air/fuel ratio of the exhaust gas on the upstream side of the three-way catalyst 10; and an exhaust temperature sensor 11 as one aspect of an exhaust temperature detector to measure an exhaust gas temperature on an upstream side of the three-way catalyst 10.

The engine 100 includes an engine control unit (ECU 20) that controls the combustion state of the engine 100. Signals obtained from each of the air flow sensor 1, the air-fuel ratio sensor 9, the coolant temperature sensor 14, the intake air temperature sensor 15, the exhaust temperature sensor 11, the crank angle sensor 13, the fuel pressure sensor 18, the intake pressure sensor 21, the ignition system 4, the variable valve 5, and the knock sensor 25 are transmitted to the ECU 20. In addition, a signal obtained from an accelerator opening degree sensor 16 that detects the depression amount of the accelerator pedal, that is, the accelerator opening degree, is also transmitted to the ECU 20.

The ECU 20 calculates a demanded torque on the engine 100 on the basis of a signal obtained from the accelerator opening degree sensor 16. Furthermore, the ECU 20 calculates the rotation speed of the engine 100 on the basis of the signal obtained from the crank angle sensor 13. The ECU 20 also calculates the operation state of the engine 100 on the basis of the signals obtained from the outputs of the above-described various sensors, and calculates the operation amount related to the engine 100, such as the air flow rate, the fuel injection amount, the ignition timing, the throttle opening degree, the operation amount of the variable valve, and fuel pressure.

The fuel injection amount calculated by the ECU 20 is converted into a valve open pulse signal and transmitted to the fuel injection device 3. Moreover, an ignition signal generated so as to perform ignition at the ignition timing calculated by the ECU 20 is transmitted from the ECU 20 to the ignition system 4. The throttle opening degree calculated by the ECU 20 is transmitted to the electronically controlled throttle 2 as a throttle driving signal. The operation amount of the variable valve is transmitted as a variable valve drive signal to the variable valve 5. The fuel pressure is transmitted to the high-pressure fuel pump 17 as a high-pressure fuel pump drive signal.

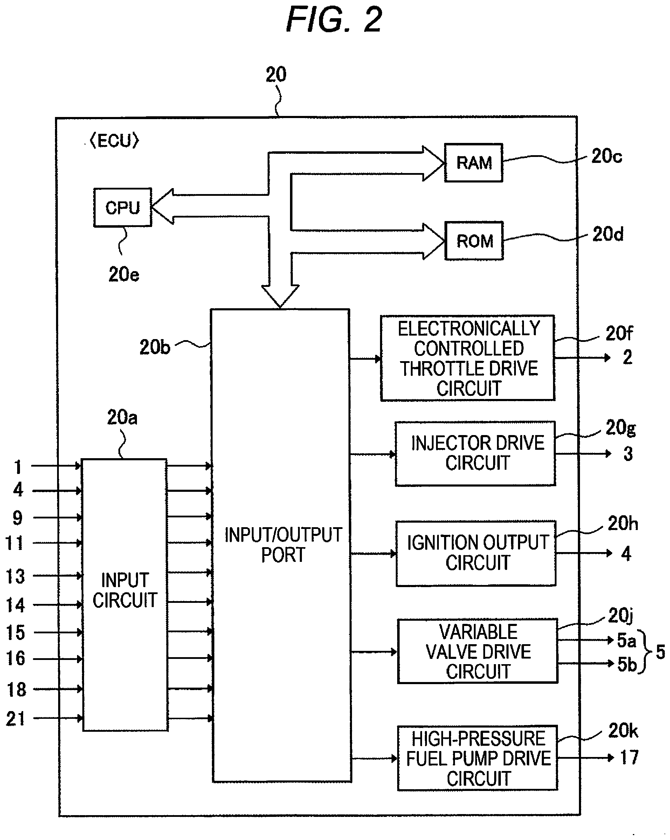

On the basis of the valve opening pulse signal transmitted from the ECU 20 to the fuel injection device 3, a predetermined amount of fuel is injected from the fuel injection device 3 to the air flowing into the combustion chamber 12 from the intake pipe 6 via an intake valve (not illustrated), whereby an air-fuel mixture is formed. The air-fuel mixture formed in the combustion chamber 12 is exploded by a spark generated from an ignition plug 4a (refer to FIG. 2) of the ignition system 4 at a predetermined ignition timing on the basis of the ignition signal. The combustion pressure of the air-fuel mixture presses down a piston (not illustrated) to generate the driving force of the engine 100. The exhaust gas after the explosion is delivered to the three-way catalyst 10 via the exhaust pipe 8, and an exhaust component of the exhaust gas is purified inside the three-way catalyst 10 and discharged to the outside.

FIG. 2 illustrates an internal configuration of the ECU 20 (control device) illustrated in FIG. 1. The ECU 20 in the figure mainly includes: an input circuit 20a; an input/output port 20b consisted of an input port and an output port; a ROM 20d storing a control program describing operation processing; a CPU20e that performs arithmetic operation in accordance with the control program; a RAM 20c storing a value indicating the operation amount of each of actuators calculated in accordance with the control program; and drive circuits 20f to 20k controlling each of the actuators on the basis of a value indicating the operation amount of each of the actuators.

As illustrated in the drawing, the input circuit 20a of the ECU 20 receives inputs of output signals from devices such as the air flow sensor 1, the ignition system 4, the air-fuel ratio sensor 9, the exhaust temperature sensor 11, the crank angle sensor 13, the coolant temperature sensor 14, the intake air temperature sensor 15, the accelerator opening degree sensor 16, the fuel pressure sensor 18, the intake pressure sensor 21, and the knock sensor 25. Note that the input signals input to the input circuit 20a are not limited to these. The input signal of each of the sensors input to the input circuit 20a is transmitted to an input port in the input/output port 20b to be stored in the RAM 20c, and then undergoes arithmetic operation by the CPU 20e in accordance with a control program stored beforehand in the ROM 20d.

The value indicating the operation amount of each of the actuators calculated in accordance with the control program by the CPU 20e is stored in the RAM 20c and then transmitted to an output port in the input/output port 20b. The value passes through each of drive circuits (the electronic throttle drive circuit 20f, an injector drive circuit 20g, an ignition output circuit 20h, a variable valve drive circuit 20j, a high-pressure fuel pump drive circuit 20k, etc.) so as to be transmitted to each of the actuators (the electronically controlled throttle 2, the injector 3, the ignition system 4, the variable valve 5, the high-pressure fuel pump 17, etc.). The drive circuit in the ECU 20 is not limited to these.

Here, the output signal of the knock sensor 25 is input to the input circuit 20a of the ECU 20 as described above, and on the basis of this input signal (knock sensor signal), the ECU 20 detects knocking of the engine 100 in accordance with the control program stored beforehand in the ROM 20d by the CPU20e. In a case where the occurrence of knocking of the engine 100 is detected, the ECU 20 transmits a control signal to the ignition system 4 via the ignition output circuit 20h to control its ignition timing.

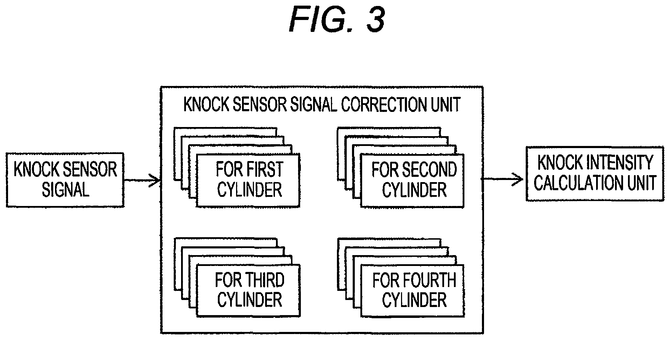

Next, a method for detect knocking in the engine 100 by the ECU 20 will be briefly described with reference to FIGS. 3 to 8.

FIG. 3 is a block diagram illustrating a configuration of processing starting from the knock sensor signal input to the control device (ECU 20) illustrated in FIG. 1 until the knock frequency intensity is calculated. The signal detected by the knock sensor is corrected by a knock sensor signal correction unit in consideration of influence to the block. Here, there is provided a conversion map for each of cylinders and a conversion map for each of water temperatures in each of cylinders. The knock sensor signal correction unit performs correction in consideration of the influence to the block, and thereafter, knock intensity (pressure wave intensity) is calculated by a knock intensity calculation unit.

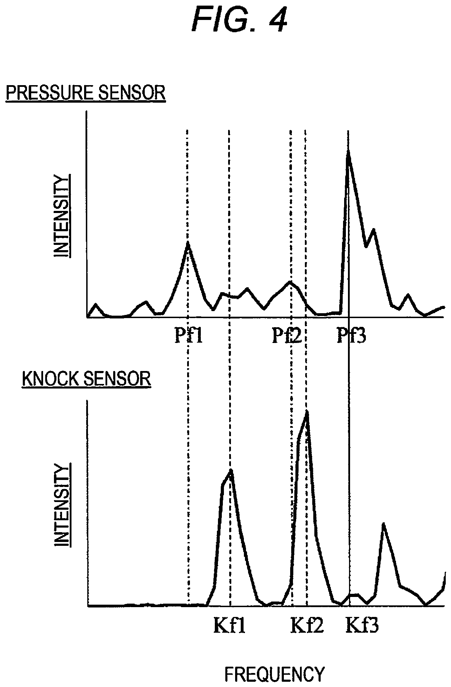

FIG. 4 is a diagram illustrating frequency analysis results of the pressure sensor output and the knock sensor output during the knocking cycle. As illustrated in FIG. 4, characteristic frequencies (Pf1, Pf2, and Pf3) of pressure waves as a fundamental cause of vibration do not necessarily match characteristic frequencies (Kfl, Kf2, and Kf3) of the knock sensor signal detected as vibration of the block, respectively. This is because the result of the impulsive force input to the engine block at the collision of the pressure wave with the wall surface passes through the characteristics of the engine block and appears as knock sensor output. Moreover, the relations of the values of the frequency components are also mutually different. That is, the knock sensor exhibits lower signal strength in each of the characteristic frequencies Pf1 and Pf3 at positions sandwiching the center characteristic frequency Pf2 than the signal strength in the center characteristic frequency Pf2.

As a result, it can be observed, in the knock sensor, that the intensity of the center frequency Kf2 is higher than the intensity of each of the characteristic frequencies Kf1 and Kf3 located to sandwich the frequency Kf2. Characteristic frequency shifts and the magnitude relations of the frequency components of the signal change in this manner. These changes are caused by the existence of an engine block linking the in-cylinder pressure with the knock sensor. Accordingly, by evaluating and utilizing the influence of the engine block on the basis of the relationship between the in-cylinder pressure and the knock sensor output, it is possible to easily reproduce the in-cylinder pressure characteristic from the knock sensor signal.

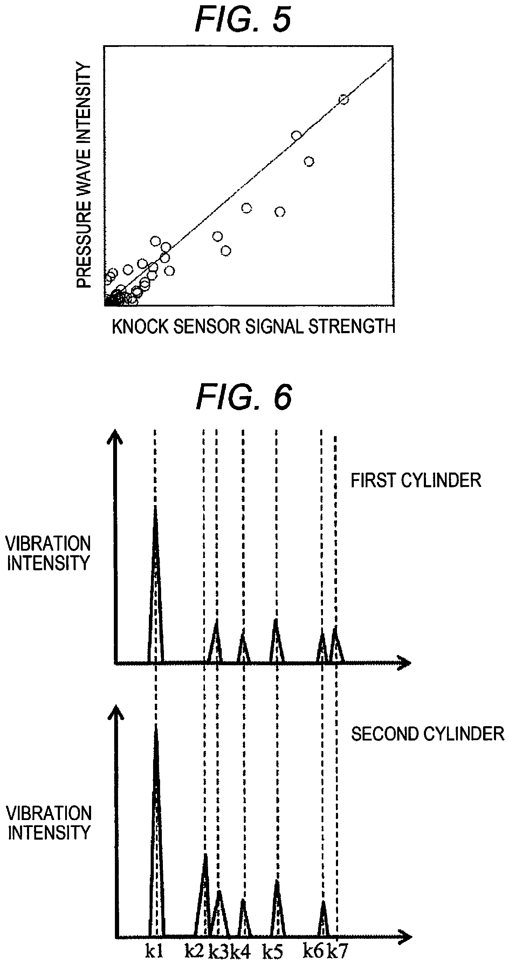

FIG. 5 illustrates a linear relationship between the signal value of the characteristic frequency of the knock sensor signal and the signal ground of the characteristic frequency of the pressure sensor signal. FIG. 5 is a graph plotting individual cycle values on the following assumption by using the strengths P(Pf1) and P(Pf2) of the pressure sensor signals of the frequencies Pf1 and Pf2 in FIG. 4 and using the strengths K(Kf1) and K(Kf2) of the knock sensor signals of the frequencies Kf1 and Kf2. P(Pf1) + P(Pf2) = K(Kf1) + 2K(Kf2)

This indicates a possibility of correcting frequencies of corresponding signals in accordance with the change of the characteristic frequency due to the engine block (using correspondence of P(Pf1) and K(Kf1), and using signals with different frequencies by P(Pf2) and K(Kf2)), and by increasing the weight of the radio frequency component of the knock sensor value in consideration of attenuation, it is possible to reproduce the in-cylinder pressure intensity from the knock sensor signal.

FIG. 6 is a diagram illustrating a characteristic frequency of a knock sensor signal for each of cylinders in which knocking has occurred. As illustrated in FIG. 6, for example, frequency K2 is a characteristic frequency found in the second cylinder alone, while frequency K7 is a characteristic frequency found in the first cylinder alone. The characteristics from the cylinder in which knocking occurred to the knock sensor are mutually different in each of cylinders. Accordingly, the signal correction unit of FIG. 3 needs to perform signal correction in view of block characteristic by changing the characteristic frequency to be selected for each of cylinders, for example. By considering the characteristics of the block corresponding to each of cylinders in this manner, it is possible to appropriately handle the conversion from pressure to vibration, enabling prediction of the pressure wave intensity more precisely.

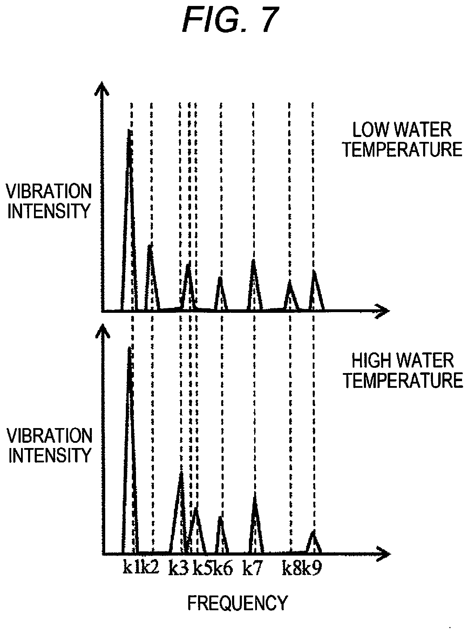

FIG. 7 is a diagram illustrating a characteristic frequency of a knock sensor signal for each of water temperatures when knocking occurs. As illustrated in FIG. 7, for example, frequencies K2, K5 and K8 are characteristic frequencies specific to low water temperatures, while frequencies K3 and K5 are characteristic frequencies specific to high water temperatures. The water temperature at the time of occurrence of knocking as described above causes a change in the characteristic frequency of the pressure wave due to the change in the in-cylinder temperature, and causes a change in the characteristic of the block. This results in a change in the characteristic frequency arising as a signal of the knock sensor. In the signal correction unit of FIG. 3, it is necessary to perform signal correction in consideration of the block characteristic that changes in accordance with the water temperature by performing, for example, a change in the characteristic frequency selected for each of the water temperatures. With consideration of the block characteristics corresponding to the water temperature in this manner, it is possible to appropriately handle the conversion from pressure to vibration, enabling prediction of the pressure wave intensity more in a sacred place.

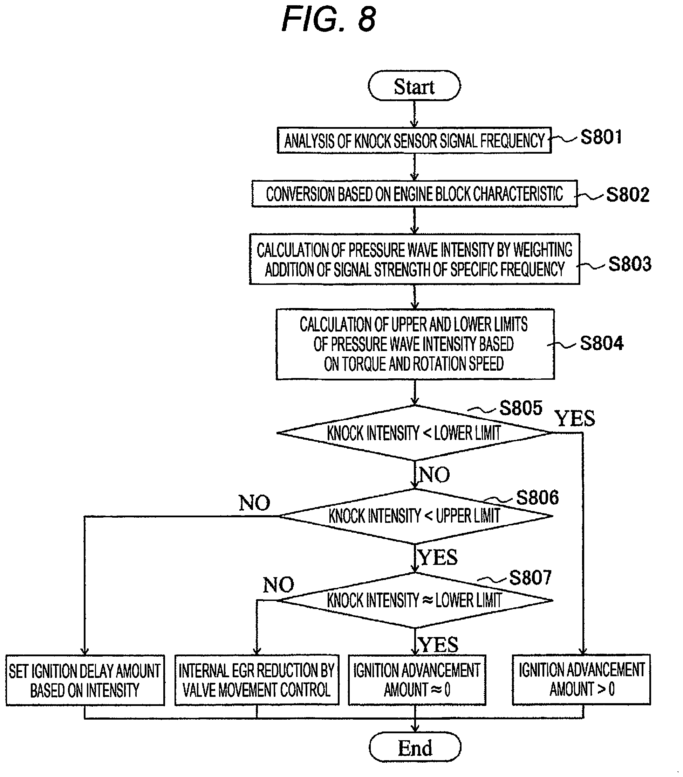

FIG. 8 illustrates a flowchart of processing in the knock sensor signal correction unit and knock intensity calculation unit in FIG. 3. In step S801, knock sensor signal frequency analysis is performed on the input signal. For example, it is allowable here to use a power spectrum for each of frequencies with the use of Fourier transform as frequency analysis, or allowable to use a band pass filter to extract a signal with a characteristic frequency. Selection may be performed in accordance with advantages and disadvantages of the ECU, and specific processing method to be performed at the knock sensor signal correction unit and the knock intensity calculation unit of FIG. 3 may be defined in accordance with this. Next, in step S802, the knock sensor signal is converted on the basis of the characteristics of the engine block. This is processing of increasing or decreasing the signal strength of each of frequency components in consideration of characteristics of the engine block. The processing proceeds to step S803, in which weighting addition of signal strengths of a specific frequency is performed to obtain knock intensity. With the above processing, itis possible to obtain the pressure wave intensity from the knock sensor signal in consideration of the characteristic of the engine block, enabling more precise knock intensity prediction.

As described above, the present exemplary embodiment provides an internal combustion engine control device (ECU20 and CPU20e) that controls an internal combustion engine (engine 100) having the knock sensor 25, the control device including: the signal correction unit that corrects a signal for each of frequencies of the knock sensor 25 on the basis of a characteristic of the engine block; and the calculation unit that calculates pressure wave intensity from the signal for each of frequencies corrected by the signal correction unit. In the signal correction unit of the CPU 20e, it is desirable to change the correction method in accordance with the cylinder to be detected. In the signal correction unit of the CPU 20e, it is desirable to change the correction method in accordance with the change of the coolant of the internal combustion engine (engine 100). Furthermore, it is desirable that the calculation unit of the CPU 20e uses a power spectrum as the signal for each of frequencies or a signal strength of the characteristic frequency.

In addition, the internal combustion engine control device (ECU 20 and CPU 20e) of the present exemplary embodiment includes a calculation unit that calculates pressure wave intensity on the basis of a characteristic of the engine block for the signals of each of frequencies of the knock sensor 25. Step S804 of FIG. 8 calculates upper limit and lower limit values of the pressure wave intensity on the basis of the torque and the rotation speed.

As indicated in step S805 of FIG. 8, the CPU 20e that performs calculation controls to advance the ignition timing of the ignition plug in a case where the pressure wave intensity (knock intensity) calculated by the calculation unit is smaller than a lower limit value. When the determination is No in step S805 in FIG. 8, the processing proceeds to step S806. In a case where the pressure wave intensity (knock intensity) calculated by the calculation unit is higher than an upper limit value (No in step S806), the ignition timing of the ignition plug is controlled to be delayed.

When the determination is Yes in step S806 in FIG. 8, the processing proceeds to step S807. In a case where the pressure wave intensity (knock intensity) calculated by the calculation unit is in the vicinity of a lower limit value (Yes in step S807), ignition timing of the ignition plug is controlled to maintain a substantially constant advancement amount. In a case where the determination is No at step S807 and the pressure wave intensity calculated by the calculation unit is larger than the lower limit value and smaller than the upper limit value, an EGR control unit controls to reduce the internal EGR rate, included in the CPU 20e of the present exemplary embodiment.

With the control described above, it is possible to control the internal combustion engine so as to improve fuel efficiency while suppressing occurrence of knocking.

### Reference Signs List

- 1: air flow sensor
- 2: electronically controlled throttle
- 3: fuel injection device
- 4: ignition system
- 5: variable valve
- 5a: intake valve variable device
- 5b: exhaust valve variable device
- 6: intake pipe
- 7: cylinder head
- 8: exhaust pipe
- 9: air-fuel ratio sensor
- 10: three-way catalyst
- 11: exhaust temperature sensor
- 12: combustion chamber
- 13: crank angle sensor
- 14: coolant temperature sensor
- 15: intake air temperature sensor
- 16: accelerator opening degree sensor
- 17: high-pressure fuel pump
- 18: fuel pressure sensor
- 20: engine control unit (ECU) (control device)
- 20a: input circuit
- 20b: input/output port
- 20c: RAM
- 20d: ROM
- 20e: CPU
- 20f: electronically controlled throttle drive circuit
- 20g: injector drive circuit
- 20h: ignition output circuit
- 20j: variable valve drive circuit
- 20k: high-pressure fuel pump drive circuit
- 20m: knock detector (detector)
- 20n: knock avoidance control unit
- 21: intake pressure sensor
- 25: knock sensor
- 100: engine (internal combustion engine)

## Claims

1. An internal combustion engine control device that controls an internal combustion engine having a knock sensor, comprising:
a signal correction unit that corrects a signal for each of frequencies of the knock sensor on the basis of a characteristic of an engine block; and
a calculation unit that calculates pressure wave intensity from the signal for each of frequencies corrected by the signal correction unit.

2. The internal combustion engine control device according to claim 1,
wherein the signal correction unit changes a correction method in accordance with a cylinder to be detected.

3. The internal combustion engine control device according to claim 1,
wherein the signal correction unit changes a correction method in accordance with a change in coolant of the internal combustion engine.

4. The internal combustion engine control device according to claim 1,
wherein a power spectrum or a signal strength of a characteristic frequency is used as the signal for each of frequencies.

5. An internal combustion engine control device that controls an internal combustion engine having a knock sensor, comprising
a calculation unit that corrects a signal for each of frequencies of the knock sensor on the basis of a characteristic of an engine block, and calculates pressure wave intensity.

6. The internal combustion engine control device according to claim 5, further comprising
a control unit that controls to advance an ignition timing of an ignition plug in a case where the pressure wave intensity calculated by the calculation unit is smaller than a lower limit value.

7. The internal combustion engine control device according to claim 5, further comprising
a control unit that controls to delay an ignition timing of an ignition plug in a case where the pressure wave intensity calculated by the calculation unit is greater than an upper limit value.

8. The internal combustion engine control device according to claim 5, further comprising
a control unit that controls to maintain an advancement amount of an ignition timing of an ignition plug at a substantially constant level in a case where the pressure wave intensity calculated by the calculation unit is in the vicinity of a lower limit value.

9. The internal combustion engine control device according to claim 5, further comprising
an EGR control unit that controls to reduce an internal EGR rate in a case where the pressure wave intensity calculated by the calculation unit is greater than a lower limit value and smaller than an upper limit value.
